(19)

Europäisches
Patentamt
European
Patent Office
Office européen
des brevets

(11) **EP 3 604 414 A1**

(12) **EUROPEAN PATENT APPLICATION**
published in accordance with Art. 153(4) EPC

(43) Date of publication:
**05.02.2020 Bulletin 2020/06**

(21) Application number: **18770211.3**

(22) Date of filing: **15.03.2018**

(51) Int Cl.:
*C08J 9/26* (2006.01)          *H01M 2/16* (2006.01)

(86) International application number:
**PCT/JP2018/010133**

(87) International publication number:
**WO 2018/173904 (27.09.2018 Gazette 2018/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.03.2017   JP 2017056398**

(71) Applicant: **Toray Industries, Inc.
Tokyo 103-8666 (JP)**

(72) Inventors:
• **KAWASHIMA, Atsumichi
Nasushiobara-shi
Tochigi 329-2763 (JP)**
• **SATO, Go
Nasushiobara-shi
Tochigi 329-2763 (JP)**
• **LI, Chunyao
Nasushiobara-shi
Tochigi 329-2763 (JP)**
• **SHIMOKAWATOKO, Haruka
Nasushiobara-shi
Tochigi 329-2763 (JP)**

(74) Representative: **Hoefer & Partner Patentanwälte
mbB
Pilgersheimer Straße 20
81543 München (DE)**

(54) **MICROPOROUS POLYOLEFIN MEMBRANE AND BATTERY INCLUDING SAME**

(57)    For heightening the safety of lithium-ion batteries while attaining increases in the energy density and output thereof, it is important to make a separator have a smaller maximum pore diameter, a higher piercing strength, and a smaller transverse-direction melting-heat shrinkage. However, achieving a balance thereamong has been difficult. The present invention addresses the problem of solving the difficulty. The present invention relates to a microporous polyolefin membrane characterized by having a piercing strength of 4.5 N or higher per membrane thickness of 20 $\mu$m and by comprising a polyolefin, the polyolefin having a molecular-weight distribution in which the proportion of components each having a weight-average molecular weight of $5.0 \times 10^6$ or higher is 0.6-1.5%.

EP 3 604 414 A1

**Description**

TECHNICAL FIELD

The present invention relates to a polyolefin microporous membrane, and a battery including the same.

BACKGROUND ART

Polyolefin microporous membranes are used as separation membranes used for the separation of substances, selective permeation and the like, microfiltration membranes, separators for fuel cells, separators for capacitors, and the like. In addition to the above, polyolefin microporous membranes are suitably used as separators for use in lithium ion secondary batteries, which are widely used in laptop personal computers, mobile phones, digital cameras and the like. This is because, for example, polyolefin microporous membranes have an excellent pin puncture strength and shutdown property.

Developments are in progress in order to achieve further increases in energy density, capacity and output of lithium ion secondary batteries, and separators tend to be increasingly thinner, along with such developments. In order to equally achieve an efficient battery production process and battery safety, separators are required to have the same strength and melt-heat shrinkage ratio as those of conventional products, even in the case of having a reduced thickness. This means that an increased strength per membrane thickness is required. However, the pin puncture strength and the melt-heat shrinkage ratio are conflicting properties in polyolefin microporous membranes, and it has been difficult to achieve a good balance between these properties.

Further, an increase in the maximum pore size of a separator makes the anode and cathode of a battery more susceptible to short circuits. Therefore, a separator having a smaller maximum pore size is desirable for the purpose of reducing self-discharge. However, there are cases where a smaller maximum pore size results in a reduced output density of the resulting battery.

In view of the above mentioned problems, Patent Document 1 proposes a method of obtaining a polyolefin microporous membrane which has a maximum pore size of 100 nm or less, a pin puncture strength per 20 $\mu$m of 4 N or more, and a maximum shrinkage ratio (melt-heat shrinkage ratio) in the TD direction, as measured by TMA at an external stress of 2 mN, of 0% or less.

Patent Document 2 proposes a method of obtaining a polyolefin microporous membrane which has a maximum pore size of from 100 to 250 nm, and a heat shrinkage at 120°C of 5% or less in both the length direction and the width direction.

Further, Patent Document 3 proposes a method of obtaining a microporous membrane which has a maximum pore size of 45 nm or less, and a tensile strength in the longitudinal direction of from 1000 to 3500 kgf/cm$^2$.

PRIOR ART DOCUMENTS

PATENT DOCUMENTS

Patent Document 1: JP 2009-132904 A
Patent Document 2: JP 2010-007053 A
Patent Document 3: JP 2015-120786 A

SUMMARY OF THE INVENTION

PROBLEMS TO BE SOLVED BY THE INVENTION

However, Examples of the above described Patent Document 1 describes that the polyolefin microporous membrane obtained therein tends to have a higher self-discharge rate, because the minimum value of the maximum pore size is 63 nm, and the maximum pore size cannot be reduced any further. In addition, the polyolefin microporous membrane in the above described Patent Document 1 has a low melt-heat shrinkage ratio of 0% or less. Therefore, in cases where the polyolefin microporous membrane is used as a battery separator, and when the resulting battery is heated, thermal run-away starts without the occurrence of a micro-short circuit between the cathode and anode, and thus there are cases where the energy of the battery is released all at once, possibly resulting in a poor thermal stability. In the method proposed in the above described Patent Document 2, the maximum pore size of the polyolefin microporous membrane cannot be reduced to 100 nm or less, and thus, the resulting battery tends to have a lower output density.

Patent Document 3 is silent about the melt-heat shrinkage ratio of the microporous membrane, and this is not regarded as a problem to be solved.

The present invention has been made in order to solve the above mentioned problems, and an object of the present invention is to control the maximum pore size, the pin puncture strength and the melt-heat shrinkage in the TD direction of a polyolefin microporous membrane within appropriate ranges, and to achieve a good balance between these properties, so that both a high energy density and thermal stability are achieved in a battery including the polyolefin microporous membrane as a separator.

MEANS FOR SOLVING THE PROBLEMS

The present inventors have found out that it is possible to solve the above mentioned problems by the following constitutions, thereby arriving at the present invention.

Specifically, the present invention provides a polyolefin microporous membrane which has a pin puncture strength per 20 μm of membrane thickness of 4.5 N or more, and which contains a polyolefin, wherein the polyolefin has such a molecular weight distribution that the ratio of the polyolefin having a weight average molecular weight of $5.0 \times 10^6$ or more is from 0.6 to 1.5%.

The polyolefin microporous membrane according to the present invention preferably has a maximum pore size of 45 nm or more and 60 nm or less. Further, the polyolefin contained in the polyolefin microporous membrane according to the present invention is preferably polyethylene. Further, the polyethylene preferably contains ultra high molecular weight polyethylene having a weight average molecular weight of $1.0 \times 10^6$ or more. Further, the polyethylene preferably contains 10% by mass or more and 20% by mass or less of the ultra high molecular weight polyethylene with respect to 100% by mass of the total amount of the polyolefin resin. Further, the ultra high molecular weight polyethylene preferably has a weight average molecular weight of less than $2.0 \times 10^6$.

The present invention also provides a battery including: a cathode; an anode; and a separator; and including the polyolefin microporous membrane according to the present invention as the separator.

Further, the battery according to the present invention is preferably a lithium ion secondary battery.

EFFECT OF THE INVENTION

The polyolefin microporous membrane according to the present invention has a relatively large maximum pore size, and is capable of achieving both a high pin puncture strength and a low melt-heat shrinkage in the TD direction at a high level, by controlling the maximum pore size, the pin puncture strength and the melt-heat shrinkage in the TD direction within appropriate ranges, and achieving a good balance between these properties. In a battery including this polyolefin microporous membrane as a separator, both a high energy density and thermal stability can be achieved in a balanced manner.

MODE FOR CARRYING OUT THE INVENTION

The microporous membrane according to the present invention will now be described in detail. The present invention is not limited to the following embodiments, and various modifications can be made within the scope of the invention.

[Polyolefin Microporous Membrane]

In the present specification, the term "polyolefin microporous membrane" is used to refer to a microporous membrane containing a polyolefin as a main component, and refers, for example, to a microporous membrane containing 90% by mass or more of a polyolefin with respect to the total amount of the microporous membrane. The physical properties of the polyolefin microporous membrane according to the present invention will be described below.

(Maximum Pore Size)

In the present specification, the term "maximum pore size" refers to the size of the largest pore of all the pores distributed in a microporous membrane, and the maximum pore size can be measured by the bubble point method. In the polyolefin microporous membrane according to the present invention, the lower limit of the maximum pore size is preferably 45 nm or more, more preferably greater than 45 nm, and still more preferably 48 nm or more, and further still more preferably 50 nm or more. The upper limit of the maximum pore size is preferably 60 nm or less, and more preferably 58 nm or less. When the polyolefin microporous membrane has a maximum pore size within the above described range, and in cases where the membrane is used as a battery separator, both a reduced self-discharge and a high output density can be achieved.

For example, Patent Document 3 describes that it is possible to prevent the occurrence of a partial short circuit and to ensure excellent dielectric breakdown voltage characteristics, by adjusting the maximum pore size of the polyolefin microporous membrane to 45 nm or less. In contrast, the polyolefin microporous membrane according to the present invention can exhibit excellent dielectric breakdown voltage characteristics and short circuit resistance even in the case of having a maximum pore size of 45 nm or more, since both a high pin puncture strength and a low melt-heat shrinkage ratio are achieved at a high level, as will be described later.

As will be described later, the maximum pore size can be controlled within the above described range, by adjusting, for example, the contents and the weight average molecular weights (Mws) of ultra high molecular weight polyethylene and high density polyethylene to be used as raw materials, the stretching magnification and the like, in the production of the polyolefin microporous membrane. The maximum pore size can be measured in accordance with ASTM F316-86 (bubble point method).

(Pin Puncture Strength)

The polyolefin microporous membrane according to the present invention has a pin puncture strength per 20 $\mu$m of membrane thickness of 4.5 N or more, and preferably 4.8 N or more. When the polyolefin microporous membrane has a pin puncture strength within the above described range, and in cases where the membrane is assembled into a battery as a separator, the occurrence of a short circuit between electrodes can be prevented, allowing for an improved thermal stability. The upper limit of the pin puncture strength is, for example, 10 N or less per 20 $\mu$m of membrane thickness, but not particularly limited thereto.

As will be described later, the pin puncture strength can be controlled within the above described range, by adjusting, for example, the contents and the weight average molecular weights (Mws) of ultra high molecular weight polyethylene and high density polyethylene to be used as raw materials, the stretching magnification and the like, in the production of the polyolefin microporous membrane.

The pin puncture strength as used herein refers to a value obtained by measuring the maximum load (N), when the polyolefin microporous membrane having a membrane thickness $T_1$ ($\mu$m) is punctured with a needle having a diameter of 1 mm and having a spherical tip (curvature radius R: 0.5 mm), at a speed of 2 mm/sec. Further, the pin puncture strength (N/20 $\mu$m) per 20 $\mu$m of membrane thickness refers to a value which can be determined according to the following equation:

$$\text{Equation: pin puncture strength (N/20 } \mu\text{m)} = \text{measured pin puncture strength}$$

$$(N) \times 20/ \text{ membrane thickness } T_1 (\mu\text{m}).$$

(Melt-Heat Shrinkage Ratio)

In the polyolefin microporous membrane according to the present invention, the melt-heat shrinkage ratio in the TD direction (transverse direction or width direction), when a load of 2 g per 20 $\mu$m of membrane thickness is applied to the membrane, is 3% or more and 25%, and preferably 5% or more and 20% or less. When the melt-heat shrinkage ratio is within the above described range, a battery including the polyolefin microporous membrane according to the present invention as a separator is capable of moderately releasing thermal energy upon being heated. Accordingly, the separator moderately shrinks when the battery is heated to an abnormally high temperature, so as to allow for a gradual short circuit and a gradual release of energy, making it possible to prevent thermal run-away of the battery. Further, the separator moderately shrinks when the battery is heated to an abnormally high temperature, so as to allow for a gradual short circuit and a gradual release of energy, making it possible to prevent thermal run-away of the battery.

As will be described later, the melt-heat shrinkage ratio can be controlled within the above described range, by adjusting the contents and the weight average molecular weights (Mws) of ultra high molecular weight polyethylene and high density polyethylene to be used as raw materials, the stretching magnification and the like, in the production of the polyolefin microporous membrane.

The melt-heat shrinkage ratio as used herein refers to a value determined as follows. A load of 2 g (19.6 mN) per 20 $\mu$m of membrane thickness is applied to a sample having a width of 3 mm and a length of 10 mm, in the longitudinal direction of the sample, and the sample is allowed to melt by heating from 30°C to 160°C at a rate of 5°C/min, using TMA (Thermo-Mechanical Analysis). At this time, the ratio of the length of shrinkage, namely, the ratio of the length (Li mm) at the maximum shrinkage relative to the initial length (10 mm), of the sample, is calculated in percentage, and the thus obtained value is determined as the melt-heat shrinkage ratio. The measurement is carried out such that the longitudinal direction of the sample corresponds to the TD direction (transverse direction) of the polyolefin microporous membrane.

That is, the melt-heat shrinkage ratio (%) can be determined, using a sample (width: 3 mm × length: 10 mm) having a membrane thickness $T_1$ (μm), and according to the following equation:

$$\text{Equation: } 100 \times [10 \text{ mm - length } (L_1) \text{ in the length direction at the maximum shrinkage] } /10 \text{ mm.}$$

It is noted, however, that the load applied in the longitudinal direction is [2 × ($T_1$/20 μm)] g, and the longitudinal direction of the sample corresponds to the TD direction (transverse direction) of the polyolefin microporous membrane.

(Membrane Thickness)

The polyolefin microporous membrane according to the present invention has a membrane thickness of, for example, 30 μm or less, preferably 4 μm or more and 30 μm or less, and more preferably 5 μm or more and 25 μm or less, but not particularly limited thereto. The membrane thickness (μm) was determined by: cutting out a piece having a size of 5 cm × 5 cm from the polyolefin microporous membrane; measuring the thickness at five points, namely, the four corners and the central portion of the piece, using a contact thickness gauge; and calculating the mean value of the measured values, to be taken as the thickness.

(Air Permeability)

The polyolefin microporous membrane according to the present invention has an air permeability (Gurley value) per 20 μm of membrane thickness of, for example, 100 sec/100 $cm^3$ or more and 600 sec/100 $cm^3$ or less, and preferably 400 sec/100 $cm^3$ or less, but not particularly limited thereto. When the polyolefin microporous membrane has an air permeability within the above described range, and in cases where the membrane is used as a secondary battery separator, an excellent ion permeability can be obtained. The air permeability can be adjusted within the above described range, by adjusting the stretching conditions and the like in the production of the polyolefin microporous membrane.

The air permeability $P_2$ (sec/100 $cm^3$/20 μm)) per 20 μm of membrane thickness, is a value which can be determined according to the following equation:

$$\text{Equation: } P_2 = P_1 (\text{sec}/100 \text{ cm}^3) \times 20 (\mu m)/ \text{ membrane thickness } T_1 (\mu m).$$

The air permeability $P_1$ is a value (sec/100$cm^3$) which can be determined by measuring the microporous membrane having a membrane thickness $T_1$ (μm) in accordance with JIS P-8117, using an air permeability tester (EGO-1T, manufactured by Asahi Seiko Co., Ltd.).

(Porosity)

The polyolefin microporous membrane has a porosity of, for example, 10% or more and 70% or less, preferably 20% or more and 60% or less, and more preferably 25% or more and 55% or less, but not particularly limited thereto. When the polyolefin microporous membrane has a porosity within the above described range, it is possible to increase the amount of electrolytic solution retained, and to ensure a high ion permeability.

The porosity can be determined according to the following equation comparing: the weight $w_1$ of the polyolefin microporous membrane; and the weight $w_2$ of a non-porous polymer which is equivalent to the polyolefin microporous membrane (namely, a polymer having the same width, length and composition).

$$\text{Equation: porosity (\%) } = (w_2 - w_1) / w_2 \times 100$$

(Dielectric Breakdown Voltage)

The polyolefin microporous membrane according to the present invention preferably has a dielectric breakdown voltage (withstand voltage) per 20 μm of membrane thickness of 3.0 kV or more and 4.0 kV or less, more preferably 3.05 kV or more and 3.95 kV or less, and particularly preferably 3.1 kV or more and 3.9 kV or less. The polyolefin microporous membrane according to the present invention has excellent withstand voltage characteristics, since both a high pin puncture strength and a low melt-heat shrinkage ratio are achieved at a high level, as described above.

The dielectric breakdown voltage per 20 $\mu$m of membrane thickness as used herein refers, when the dielectric breakdown voltage in the microporous membrane having a membrane thickness $T_1$ ($\mu$m) is defined as $V_1$ (kV), to the mean value of the measured values of the dielectric breakdown voltage $V_2$, each calculated by the equation: $V_2 = (V_1 \times 20) / T_1$.

The dielectric breakdown voltage (withstand voltage) can be measured by the following method.

(1) A piece having a diameter of 60 mm is cut out from the polyolefin microporous membrane having a membrane thickness $T_1$, and placed on an aluminum plate having a size of 150 mm square. A column electrode made of brass and having a diameter of 50 mm is then placed on top of the piece of the microporous membrane, and a withstand voltage tester, TOS5051A, manufactured by Kikusui Electronics Corp is connected to the electrode.

(2) A voltage is applied to the polyolefin microporous membrane at a voltage rise rate of 0.2 kV/sec, and the value $V_1$ of the voltage at which dielectric breakdown occurs is read. The value of the dielectric breakdown voltage $V_2$ per 20 $\mu$m of membrane thickness is then calculated, according to the conversion equation: $V_2 = (V_1 \times 20) / T_1$.

(3) The measurement of the dielectric breakdown voltage $V_2$ is carried out 15 times, and the mean value of the measured values are determined as the value of the above described dielectric breakdown voltage (withstand voltage).

(Composition)

The polyolefin microporous membrane according to the present invention contains a polyolefin resin as a main component material. The polyolefin resin has such a molecular weight distribution that the ratio of the polyolefin resin having a molecular weight of $5.0 \times 10^6$ or more is from 0.6 to 1.5%, and preferably from 0.7 to 1.4%. When the above described ratio is 0.6% or more, it is possible to obtain a sufficient pin puncture strength, and to avoid an excessive increase in the maximum pore size. Further, when the above described ratio is 1.5% or less, it is possible to avoid an increase in the melt-heat shrinkage ratio, and an excessive increase in the maximum pore size. The molecular weight distribution is a value measured by gel permeation chromatography (GPC).

The polyolefin resin preferably contains polyethylene as a main component. From the viewpoint of further improving the pin puncture strength, the polyolefin resin preferably contains polyethylene in an amount of 80% by mass or more, more preferably 90% by mass or more, and still more preferably 99% by mass, with respect to 100% by mass of the total amount of the polyolefin resin. It is still further preferred that the polyolefin resin contains polyethylene alone.

The polyethylene may not only be a homopolymer of ethylene, but also a copolymer containing a small amount of another $\alpha$-olefin. Examples of the $\alpha$-olefin include propylene, butene-1, hexene-1, pentene-1, 4-methylpentene-1, octene, vinyl acetate, methyl methacrylate and styrene.

Examples of the type of the polyethylene include: high density polyethylene having a density of greater than 0.94 g/cm$^3$; medium density polyethylene having a density within the range of 0.93 g/cm$^3$ or more and 0.94 g/cm$^3$ or less; low density polyethylene having a density of less than 0.93 g/cm$^3$; and linear low density polyethylene. Among these, the polyolefin resin preferably contains high density polyethylene, from the viewpoint of further improving the pin puncture strength.

The weight average molecular weight (hereinafter, referred to as "Mw") of the high density polyethylene to be used is preferably $1 \times 10^5$ or more, and more preferably $2 \times 10^5$ or more. The upper limit of the Mw of the high density polyethylene is preferably $8 \times 10^5$ or less, and more preferably $7 \times 10^5$ or less. When the high density polyethylene has an Mw within the above described range, it is possible to achieve both a high pin puncture strength and a low melt-heat shrinkage ratio. The Mw as used above refers to the Mw of the high density polyethylene to be used as a raw material. Further, the Mw is a value measured by gel permeation chromatography (GPC).

The content of the high density polyethylene can be adjusted, for example, to 60% by mass or more and 95% by mass or less, and preferably 80% by mass or more and 90% by mass or less, with respect to 100% by mass of the total amount of the polyolefin resin, but not particularly limited thereto.

Further, the polyethylene to be used preferably contains ultra high molecular weight polyethylene. The ultra high molecular weight polyethylene may not only be a homopolymer of ethylene, but also a copolymer containing a small amount of another $\alpha$-olefin. The $\alpha$-olefin other than ethylene may be the same as those as described above. When the polyethylene contains ultra high molecular weight polyethylene, the pin puncture strength of the resulting membrane can be improved.

The ultra high molecular weight polyethylene preferably has an Mw of $1 \times 10^6$ or more, and more preferably $1 \times 10^6$ or more and less than $2 \times 10^6$. When the ultra high molecular weight polyethylene has an Mw within the above described range, it is possible to achieve both an increase in the pin puncture strength due to the refinement of pores and fibrils, and a decrease in the melt-heat shrinkage ratio due to a reduction in the number of polyethylene molecules extending over a plurality of lamellae, in the resulting polyolefin microporous membrane. When the ultra high molecular weight polyethylene has an Mw of less than $2 \times 10^6$, an excessive increase in the number of polyethylene molecules extending over a plurality of lamellae can be prevented, thereby preventing an increase in the melt-heat shrinkage ratio. Further, by adjusting the Mw of the ultra high molecular weight polyethylene to less than $2 \times 10^6$, it is possible to ensure the miscibility of the high density polyethylene with the ultra high molecular weight polyethylene during melt blending, and to avoid a decrease in the pin puncture strength. The Mw as used above refers to the Mw of the ultra high molecular weight polyethylene to be used as a raw material. Further, the Mw is a value measured by gel permeation chromatography (GPC).

The lower limit of the content of the ultra high molecular weight polyethylene is preferably 10% by mass or more, and the upper limit thereof is preferably less than 30% by mass, with respect to 100% by mass of the total amount of the polyolefin resin. When the content of the ultra high molecular weight polyethylene is within the above described range, it is possible to more easily obtain a polyolefin microporous membrane in which the pin puncture strength, the melt-heat shrinkage ratio and the maximum pore size are adjusted within the above described ranges.

The polyolefin microporous membrane according to the present invention may contain low density polyethylene, linear low density polyethylene, an ethylene-$\alpha$-olefin copolymer produced using a single-site catalyst, low molecular weight polyethylene having a weight average molecular weight of from 1000 to 4000 and/or the like. Incorporation of any of these polyethylenes imparts a shutdown function at a low temperature to the resulting polyolefin microporous membrane, making it possible to improve the properties of the membrane as a battery separator. However, if a large amount of low molecular weight polyethylene is contained, the microporous membrane is more likely to rupture during the stretching step in the production process. For example, the content of the low molecular weight polyethylene is preferably 0% by mass or more and 10% by mass or less, and may be 0% by mass or more and 5% by mass or less, or may be 0% by mass or more and 1% by mass or less, with respect to 100% by mass of the total amount of the polyolefin resin.

The polyolefin microporous membrane according to the present invention may contain polypropylene. Incorporation of polyethylene and polypropylene enables to further improve the meltdown temperature of the resulting polyolefin microporous membrane according to the present invention, in cases where the membrane is used as a battery separator. As the polypropylene, any of a homopolymer, a block copolymer and a random copolymer of polypropylene can be used. Each of the block copolymer and the random copolymer can contain propylene, and a copolymer component with another $\alpha$-olefin other than propylene. In these propylene copolymers, the other $\alpha$-olefin is preferably ethylene. In the case of incorporating polypropylene, the pin puncture strength of the resulting membrane is more likely to decrease, as compared to the case of using polyethylene alone. Therefore, a lower content of the polypropylene is preferred from the viewpoint of improving the pin puncture strength. For example, the content of the polypropylene is preferably from 0 to 10% by mass, and may be 0% by mass or more and 5% by mass or less, or may be 0% by mass or more and 1% by mass or less, with respect to 100% by mass of the total amount of the polyolefin resin.

The weight average molecular weight (Mw) of the (total) polyolefin resin is preferably $1.0 \times 10^5$ or more. The Mw of the polyolefin resin is preferably $1.0 \times 10^5$ or more, because the resulting membrane is less likely to rupture during stretching. The Mw is a value measured by gel permeation chromatography (GPC).

In addition to the above, the polyolefin microporous membrane according to the present invention may contain any of various types of additives, such as, for example, an antioxidant, a thermal stabilizer, an antistatic agent, a UV absorber, an antiblocking agent and/or a filler, as long as the effect of the present invention is not impaired. In particular, the incorporation of an antioxidant is preferred, in order to prevent the occurrence of oxidative degradation due to the thermal history of the polyethylene resin. It is important to appropriately select the type and the amount of the antioxidant and/or the thermal stabilizer to be added, in order to control or enhance the properties of the microporous membrane.

The polyolefin microporous membrane according to the present invention does not substantially contain inorganic particles. The expression "does not substantially contain inorganic particles" as used herein means, for example, that when an inorganic element is quantified by a fluorescent X-ray analysis, the particles of the inorganic element is contained in an amount of 300 ppm or less, preferably 100 ppm or less, and most preferably below the detection limit. It is noted, in the production process of the polyolefin microporous membrane, that a trace amount of inorganic particles may be contained within the above described range. This is because there are cases where contamination components derived from foreign substances, or fouling substances adhered to and detached from the raw material resins or the line and apparatus used in the production process of the polyolefin microporous membrane, may be mixed into the membrane without intentionally being incorporated.

[Method of Producing Polyolefin Microporous Membrane]

The method of producing the polyolefin microporous membrane according to the present invention is not particularly limited as long as a polyolefin microporous membrane having the above described properties can be obtained, and it is possible to use a known method of producing a polyolefin microporous membrane. One example of the method of producing the polyolefin microporous membrane according to the present invention will now be described in specific detail. However, the production method is in no way limited to the embodiment described below.

The method of producing the polyolefin microporous membrane according to the present invention preferably includes the following steps of:

(a) melt blending a polyolefin resin and a plasticizer to prepare a polyolefin solution;
(b) extruding the polyolefin solution from an extruder to form an extrudate, and cooling the extrudate to form a gel-like sheet;
(c) stretching the gel-like sheet simultaneously in the machine direction (MD direction) and the transverse direction (the direction perpendicular to the machine direction, TD direction), to obtain a stretched membrane;
(d) extracting the plasticizer from the stretched membrane to obtain a microporous membrane; and
(e) drying the microporous membrane.

Any of other steps of carrying out a hydrophilization treatment, a destaticizing treatment, re-stretching and the like may be added before, during and/or after any of the steps (c) to (e). The respective steps will be described below.

(a) Preparation of Polyolefin Solution

First, a polyolefin resin and a plasticizer are melt blended to prepare a polyolefin solution. The plasticizer is not particularly limited, and any conventionally known solvent (membrane-forming solvent) capable of sufficiently dissolving polyethylene can be used. In particular, the solvent is preferably a liquid solvent which is in the form of liquid at room temperature, in order to allow for stretching at a relatively high magnification.

Examples of the liquid solvent include: aliphatic, cyclic aliphatic and aromatic hydrocarbons, such as nonane, decane, decalin, paraxylene, undecane, dodecane and liquid paraffin; mineral oil distillates having a boiling point comparable to these hydrocarbons; and phthalic acid esters which are in the form of liquid at room temperature, such as dibutyl phthalate and dioctyl phthalate. From the viewpoint of obtaining a stable gel-like sheet, in particular, it is preferred to use a non-volatile liquid solvent such as liquid paraffin.

Further, a solvent which is in the form of solid at room temperature (solid solvent) but is miscible with polyethylene in a melt blended state, may be mixed with the above described liquid solvent, to be used as the plasticizer. Examples of such a solid solvent include stearyl alcohol, ceryl alcohol and paraffin wax. However, the use of a solid solvent alone may possibly result in the occurrence of uneven stretching and the like.

The blending ratio of the polyolefin resin in the polyolefin solution is preferably 10 parts by mass or more and 50 parts by mass or less with respect to 100 parts by mass of the total amount of the polyolefin resin and the plasticizer, from the viewpoint of improving the formability of the extrudate. When the content of the polyolefin resin is 10 parts by mass or more, the degree of swelling and neck-in at the exit of a die is reduced at the time of forming the extrudate into a sheet form, thereby improving the formability and film forming property of the sheet. Further, when the content of the polyolefin resin is 50 parts by mass or less, the shrinkage in the thickness direction is reduced, thereby improving the forming processability and film forming property.

The lower limit of the content of the polyolefin resin in the polyolefin solution is more preferably 20 parts by mass or more. The upper limit of the content of the polyolefin resin is more preferably 40 parts by mass or less, and still more preferably 35 parts by mass or less. When the content of the polyolefin resin is within the above described range, it is possible to more easily achieve both a high pin puncture strength and air permeability in a balanced manner, as will be described later, and also to control the friction coefficient of each of both the surfaces of the membrane.

As described above, the polyolefin resin preferably contains an ultra high molecular weight polyolefin having a weight average molecular weight of $1.0 \times 10^6$ or more. Since the plasticizer in the polyolefin solution will be extracted (washed) and removed in a subsequent step, the composition of the polyolefin resin can be the same as the composition of the above described polyolefin microporous membrane.

The plasticizer preferably has a viscosity at 40°C of 20 cSt or more and 200 cSt or less. When the plasticizer has a viscosity at 40°C of 20 cSt or more, the sheet obtained by extruding the polyolefin solution from the die is less likely to be uneven. On the other hand, when the plasticizer has a viscosity at 40°C of 200 cSt or less, the plasticizer can be removed easily.

The melt blending of the polyolefin solution can be carried out, for example, by a method using an extruder, but not particularly limited thereto. When it is intended to prepare a highly concentrated polyolefin solution, the melt blending is preferably carried out using a twin-screw extruder, among various extruders. If necessary, the polyolefin solution may contain any of various types of additives, such as an antioxidant and/or the like, as long as the effect of the present invention is not impaired. In particular, the polyolefin solution preferably contains an antioxidant, in order to prevent the oxidation of polyethylene.

In the extruder, the polyolefin solution is mixed uniformly at a temperature at which the polyolefin resin is completely melted. The melt blending temperature varies depending on the type of the polyolefin resin used. However, the lower limit of the melt blending temperature is preferably equal to or higher than (the melting point of the polyolefin resin + 10°C), and more preferably equal to or higher than (the melting point of the polyolefin resin + 20°C). The upper limit of the melt blending temperature is preferably equal to or lower than (the melting point of the polyolefin resin + 120°C), and more preferably equal to or lower than (the melting point of the polyolefin resin + 100°C).

The melting point as used herein refers to a value measured by DSC, in accordance with JIS K7121 (1987) (the same applies hereinafter). Specifically, in the case of a polyolefin resin (polyethylene composition) containing polyethylene as a main component, and in an amount of 90% by mass or more with respect to the total amount of the resin, for example, the lower limit of the melt blending temperature is preferably 140°C or higher, more preferably 160°C or higher, and most preferably 170°C or higher, since the polyethylene composition has a melting point of from about 130 to 140°C. The upper limit of the melt blending temperature is preferably 250°C or lower, more preferably 230°C or lower, and most preferably 200°C or lower.

Further, the melt blending temperature, in the case of containing polypropylene in the polyolefin solution, is preferably 190°C or higher and 270°C or lower.

From the viewpoint of preventing the degradation of the polyolefin resin, a higher melt blending temperature is preferred. When the melt blending temperature is 190°C or higher, unmelted materials are less likely to be present in the extrudate extruded from the die, and it is possible to avoid the occurrence of membrane rupture and the like in the subsequent stretching step. Further, when the melt blending temperature is 270°C or lower, it is possible to prevent the thermal decomposition of the polyolefin, and to prevent an excessive decrease in the physical properties, such as pin puncture strength, tensile strength and the like, of the resulting microporous membrane.

In the case of using a twin-screw extruder, the ratio (L/D) of the screw length (L) to the screw diameter (D) is preferably 20 or more and 100 or less, from the viewpoint of obtaining a good processing and blending properties as well as good dispersion and distribution properties of the resin. The lower limit of the ratio L/D is more preferably 35 or more. The upper limit of the ratio L/D is more preferably 70 or less. When the ratio L/D is 20 or more, melt blending can be carried out more sufficiently. When the ratio L/D is 100 or less, the residence time of the polyolefin solution can be prevented from being excessively long, and can be controlled within an adequate range.

The twin-screw extruder preferably has a cylinder inner diameter of 40 mm or more and 100 mm or less, from the viewpoint of obtaining good dispersion and distribution properties while preventing the degradation of the polyolefin resin to be blended.

The number of revolution (Ns) of the screws of the twin-screw extruder is preferably 150 rpm or more and 600 rpm or less, from the viewpoint of favorably dispersing the polyolefin in the resulting extrudate to obtain a microporous membrane having an excellent thickness uniformity. Further, the ratio (Q/Ns) of the amount of extrusion Q (kg/h) of the polyolefin solution relative to Ns (rpm) is preferably 0.6 kg/h/rpm or less. The ratio (Q/Ns) is more preferably 0.35 kg/h/rpm or less.

(b) Formation of Extrudate and Formation of Gel-like sheet

Subsequently, the thus obtained polyolefin solution is extruded from an extruder to form an extrudate, followed by cooling to form a gel-like sheet. First, the melt blended polyolefin solution is extruded from a die, directly or via another extruder, such that the microporous membrane as a final product has a thickness of from 5 to 100 $\mu$m, to obtain an extrudate. The die to be used may be a rectangular T die. In the case of using a T die, the die preferably has a slit gap of 0.1 mm or more and 5 mm or less, and the melt blended polyolefin solution is preferably heated to a temperature of 140°C or higher and 250°C or lower during the extrusion, from the viewpoint of ease of controlling the thickness of the microporous membrane as a final product.

Thereafter, the resulting extrudate is cooled to obtain a gel-like sheet. By cooling the extrudate, the microphase of the polyethylene (polyolefin) separated by the plasticizer can be fixed. The resulting extrudate is preferably cooled to a temperature equal to or lower than the crystallization end temperature.

The cooling is preferably carried out until both the top and bottom surfaces of the gel-like sheet reach a temperature equal to or lower than the crystallization end temperature, at a cooling rate of 250°C/ min or more, and more preferably at a cooling rate of 300°C/min or more. When the cooling rate is within the above described range, it is possible to prevent the coarsening of the crystals forming the gel in the extrudate, and to obtain a dense higher-order structure. As a result, the resulting gel-like sheet is less likely to have an uneven surface roughness. Further, when the cooling rate is within the above described range, a gel-like sheet having a fine higher-order structure can be obtained. This facilitates molecular orientation in the subsequent stretching, making it possible to achieve both good pin puncture strength and air permeability in a balanced manner, and to prevent the occurrence of curling.

The crystallization end temperature as used herein refers to the extrapolated crystallization end temperature measured in accordance with JIS K7121 (1987). Specifically, polyethylene (polyethylene composition) has an extrapolated crystallization end temperature of about 70°C or higher and 90°C or lower. Further, the cooling rate as used herein can be determined from the period of time until the resin temperature at the exit of the extruder reaches the crystallization end temperature, and from the difference in temperature between the resin temperature at the exit of the extruder and the crystallization end temperature. Accordingly, in the case of cooling the extrudate to equal to or lower than the crystallization end temperature, in the cooling process, the cooling rate is obtained by dividing the difference between the resin temperature at the exit of the extruder and the temperature of each of both the top and bottom surfaces of the gel-like sheet at the exit of the cooling process, by the period of time required for the extrudate to pass through the cooling process.

Examples of the method of cooling the extrudate include: a method of bringing the extrudate directly into contact with cold blast, cooling water, or another cooling medium; a method of bringing the extrudate into contact with a roll cooled with a coolant; and a method of using a casting drum or the like. The solution extruded from the die is taken up at a predetermined take-up ratio before or during the cooling. However, the lower limit of the take-up ratio is preferably 1 or more. The upper limit of the take-up ratio is preferably 10 or less, and more preferably 5 or less. When the take-up ratio is 10 or less, it results in a smaller neck-in and a reduced occurrence of rupture during the stretching.

The lower limit of the thickness of the gel-like sheet is preferably 0.5 mm or more, and more preferably 0.7 mm or more. The upper limit thereof is 3 mm or less, and more preferably 2 mm or less. When the gel-like sheet has a thickness of 3 mm or less, a structural irregularity in the thickness direction is less likely to occur during the cooling process, and a dense higher-order structure can be formed over the entire thickness direction. As a result, both the top and bottom structure of the sheet can be densified. Further, when the gel-like sheet has a thickness of 3 mm or less, the cooling rate of the gel-like sheet can be easily controlled within the above described preferred range.

A description has been given above of the case in which the polyolefin microporous membrane is composed of a single layer. However, the polyolefin microporous membrane according to the present invention is not limited to a single layer structure, and the membrane may be a laminate in which two or more microporous membranes (layers) are laminated. The respective microporous membranes (layers) forming the laminate may be polyolefin microporous membranes having the same composition, or polyolefin microporous membranes having different compositions. Each of the polyolefin microporous membranes forming the laminate may contain a desired resin in addition to polyethylene, as described above, as long as the effect of the present invention is not impaired. A conventional method can be used to laminate the polyolefin microporous membranes to be formed into a laminate. The laminate can be formed, for example, by: preparing desired polyolefin resins as necessary; supplying these resins separately to respective extruders; melt blending each of the resins separately with a solvent at a desired temperature; allowing the respective resin solutions to be layered inside a polymer tube or a die; extruding the layered solutions from a slit-like die such that the respective layers have an intended lamination thicknesses; and the like.

(c) Simultaneous Biaxial Stretching

Thereafter, the thus formed gel-like sheet is simultaneously stretched (simultaneous biaxial stretching) in the machine direction (MD direction) and the transverse direction (the direction perpendicular to the machine direction, TD direction), to obtain a stretched membrane. By simultaneously carrying out the stretching in the machine direction and the transverse direction, as described above, the melt shrinkage rate in the transverse direction can be reduced. The stretching is carried out while heating the gel-like sheet, and using an ordinary tenter method at a predetermined magnification.

The stretching magnification varies depending on the thickness of the gel-like sheet. However, the gel-like sheet is preferably stretched 5 times or more in both directions, and 25 times or more in area magnification. The stretching magnifications in the machine direction and the transverse direction may be different from each other.

The stretching temperature is preferably equal to or lower than the melting point of the polyolefin resin, and more preferably within the range of equal to or higher than (the crystal dispersion temperature, Tcd, of the polyolefin resin) and equal to or lower than (the melting point of the polyolefin resin). When the stretching temperature is equal to or lower than the melting point of the gel-like sheet, the polyolefin resin is prevented from melting, and the molecular chains of the resin can be efficiently orientated by the stretching. Further, when the stretching temperature is equal to or higher than the crystal dispersion temperature of the polyolefin resin, the polyolefin resin is softened sufficiently and the stretching tension is reduced, thereby improving the film forming property. As a result, the gel-like sheet is less susceptible to rupture during the stretching, and can be stretched at a high magnification.

Specifically, in the case of a polyethylene resin, which has a crystal dispersion temperature of about 90°C or higher and 100°C or lower, the stretching temperature is preferably 80°C or higher. The upper limit of the stretching temperature is preferably 130°C or lower, more preferably 125°C or lower, and most preferably 120°C or lower. The crystal dispersion temperature, Tcd, is determined from the temperature characteristics of dynamic viscoelasticity, measured in accordance with ASTM D4065. The crystal dispersion temperature can also be determined by NMR.

The stretching as described above causes cleavage of the higher-order structure formed in the gel-like sheet, resulting in the refinement of the crystal phase and the formation of a number of fibrils. The fibrils are connected irregularly and three-dimensionally to form a network structure. The stretching serves to improve the mechanical strength and to enlarge the pores, making it possible to obtain a polyolefin microporous membrane which can be suitably used as a battery separator.

In the method of producing the polyolefin microporous membrane according to the present invention, the simultaneous biaxial stretching is preferably carried out before removing the plasticizer in the gel-like sheet. In the gel-like sheet containing a sufficient amount of plasticizer, the polyolefin is in a sufficiently plasticized and softened state. Therefore, the stretching before removing the plasticizer enables a smooth cleavage of the higher-order structure, thereby allowing for a uniform refinement of the crystal phase. This causes the pores and fibrils in the resulting polyolefin microporous membrane to be more uniformly refined, as a result of which both an improved pin puncture strength and a low melt-heat shrinkage ratio, as described above, can be achieved in a more stable manner.

(d) Extraction (Washing) of Plasticizer from Stretched Membrane

Next, the solvent remaining in the gel-like sheet is extracted and removed, namely, washed, using a washing solvent. Since the polyolefin phase and the solvent phase are separated, the removal of the solvent gives a microporous membrane. Examples of the washing solvent include volatile solvents, for example: saturated hydrocarbons such as pentane, hexane and heptane; chlorinated hydrocarbons such as dichloromethane and carbon tetrachloride; ethers such as diethyl ether and dioxane; ketones such as methyl ethyl ketone; linear fluorocarbons such as ethane trifluoride, $C_6F_{14}$ and $C_7F_{16}$; cyclic hydro fluorocarbons such as $C_5H_3F_7$; hydrofluoroethers such as $C_4F_9OCH_3$ and $C_4F_9OC_2H_5$; and perfluoroethers such as $C_4F_9OCF_3$ and $C_4F_9OC_2F_5$. These washing solvents have a low surface tension (for example, 24 mN/m or less at 25°C). The use of a washing solvent having a low surface tension prevents the network structure forming the micropores from shrinking due to the surface tension at the air-liquid interface, during drying after washing, thereby enabling to obtain a microporous membrane having a high porosity and permeability. These washing solvents are selected as appropriate depending on the solvent used for dissolving the polyolefin resin, and used alone or as a mixture.

The washing can be carried out by a method of dipping the gel-like sheet in the washing solvent for extracting the plasticizer, a method of showering the washing solvent onto the gel-like sheet, a combination of these methods, or the like. The amount of the washing solvent to be used varies depending on the washing method. However, in general, the washing solvent is preferably used in an amount of 300 parts by mass or more with respect to 100 parts by mass of the gel-like sheet. The washing temperature is required to be from 15 to 30°C, and increased up to 80°C, if necessary. At this time, the period of time during which the gel-like sheet is dipped in the washing solvent is longer the better, from the viewpoints of: enhancing the washing effect of the solvent; preventing the physical properties in the transverse direction and/or the machine direction of the resulting microporous membrane from being non-uniform; and improving the mechanical properties and electrical physical properties of the microporous membrane.

The washing as described above is preferably carried out until the solvent remaining in the gel-like sheet after washing, namely, in the microporous membrane, is reduced to less than 1% by mass.

(e) Drying of Microporous Membrane

After the completion of the washing, the washing solvent is removed by drying. The drying is carried out by heat drying, air drying, or the like, but not particularly limited thereto. The drying temperature is preferably equal to or lower than the crystal dispersion temperature, Tcd, of the polyethylene composition, and particularly preferably equal to or lower than (Tcd - 5°C). The drying is preferably carried out until the remaining washing solvent is reduced to 5% by mass or less, and more preferably 3% by mass or less, with respect to 100% by mass of the microporous membrane in dry weight. An insufficient drying causes a decrease in the porosity of the microporous membrane in a subsequent heat treatment, resulting in the deterioration of permeability.

(f) Other Steps

After the completion of the washing and drying, the microporous membrane may further be stretched (hereinafter, referred to as re-stretching) about 5% to 20%, in the machine direction or in the transverse direction, or in both directions, in order to improve the mechanical strength, such as pin puncture strength.

In the method of producing the polyolefin microporous membrane according to the present invention, the stretched membrane or the microporous membrane after stretching may be subjected to a heat setting treatment and/or a heat relaxation treatment. The heat setting treatment and/or the heat relaxation treatment stabilize(s) the crystals and serve(s) to form a uniform lamellar layer, making it possible to produce a microporous membrane having a large pore size and an excellent strength. The heat setting treatment is carried out within a temperature range of from the crystal dispersion temperature to the melting point of the polyolefin resin constituting the polyolefin microporous membrane.

The heat setting treatment is carried out by a tenter method, a roll method or a rolling method. The period of time for carrying out the heat setting treatment is, for example, 20 seconds or more and 60 seconds or less.

The heat relaxation treatment can be carried out, for example, by the method disclosed in JP 2002-256099 A.

In addition to the above, the stretched membrane or the microporous membrane may also be subjected to a hydrophilization treatment, depending on the application. The hydrophilization treatment can be carried out by monomer grafting, a surfactant treatment, corona discharge or the like. The monomer grafting is preferably carried out after performing a crosslinking treatment.

In the case of performing a surfactant treatment, any of a nonionic surfactant, a cationic surfactant, an anionic surfactant and an amphoteric surfactant can be used, but a nonionic surfactant is preferred. The microporous membrane is dipped in a solution in which a surfactant is dissolved in water or a lower alcohol such as methanol, ethanol or isopropyl alcohol, or alternatively, the microporous membrane is coated with the solution by a doctor blade method.

If necessary, it is also possible to perform a corona discharge treatment on at least one surface of the stretched membrane or the microporous membrane, in an atmosphere of air or nitrogen, or a mixed atmosphere of carbon dioxide gas and nitrogen.

[Applications]

The polyolefin microporous membrane according to the present invention can be suitably used as a separator (separating material) in an electrochemical reactor, such as a battery or a capacitor. A battery at least includes a cathode, an anode and a separator. In particular, the polyolefin microporous membrane can be suitably used as a separator for a nonaqueous electrolyte-based secondary battery, particularly, for a lithium ion secondary battery. Although the polyolefin microporous membrane according to the present invention can be suitably used as it is as a separator, a nonwoven fabric or a coating layer having heat resistance etc., may be laminated on the microporous membrane. Even in this case, the microporous membrane can be suitably used as a separator.

Since the polyolefin microporous membrane according to the present invention exhibits a high pin puncture strength of 4.5 N or more, when used as a separator for a lithium ion secondary battery, it is possible to ensure a sufficient thermal stability of the resulting battery, even in cases where the microporous membrane has a reduced thickness in order to achieve a higher energy density. Further, since the polyolefin resin has such a molecular weight distribution that the ratio of the polyolefin resin having a molecular weight of $5.0 \times 10^6$ or more is from 0.6 to 1.5%, it is possible to ensure a sufficient pin puncture strength, and to reduce the melt-heat shrinkage to a low level.

EXAMPLES

[Methods of Measuring Physical Properties]

The methods of measuring the respective physical properties will be described below.

(1) Thickness (Average Membrane Thickness)

A piece having a size of 5 cm $\times$ 5 cm was cut out from the polyolefin microporous membrane, and the thickness was measured at five points, namely, the four corners and the central portion of the piece, and the mean value of the measured values was determined as the thickness ($\mu$m). A contact thickness gauge was used in the measurement.

(2) Pin Puncture Strength of Polyolefin Microporous Membrane.

The maximum load was measured, when the microporous membrane having a membrane thickness T1 ($\mu$m) was punctured with a needle having a diameter of 1 mm and having a spherical tip (curvature radius R: 0.5 mm), at a speed of 2 mm/sec. The measured maximum load La was converted to the maximum load Lb at a membrane thickness of 20 $\mu$m, according to the equation: Lb = (La $\times$ 20) / T1, and the calculated value was determined as the pin puncture strength was (gf/20 $\mu$m).

(3) Melt-Heat Shrinkage Ratio

A load of 2 g was applied to a sample having a width of 3 mm and a length of 10 mm, in the longitudinal direction thereof, and the sample was heated from 30°C to 160°C at a rate of 5°C/min, using TMA (Thermo-Mechanical Analysis). At this time, the value obtained by: (10 mm - the length at the maximum shrinkage)/ 10 mm, was determined as the melt-heat shrinkage ratio.

(4) Maximum Pore Size

The maximum pore size of the microporous membrane was measured by the method (bubble point method) in accordance with ASTM F316-86. Perm-Porometer (model number: CFP-1500A) manufactured by Porous Materials, Inc., was used as a measurement device, and Galwick was used as a measurement liquid.

(5) Weight Average Molecular Weight and Molecular Weight Distribution

The Mws of the UHMWPE and HDPE used as materials were determined by gel permeation chromatography (GPC) under the following conditions.

- Measuring apparatus: GPC-150C, manufactured by Waters Corporation
- Column: Shodex UT806M, manufactured by Showa Denko K.K.
- Column temperature: 135°C
- Solvent (mobile phase): o-dichlorobenzene
- Solvent flow rate: 1.0 ml/min
- Sample concentration: 0.1% by mass (dissolution conditions: 135°C/1 h)
- Injection amount: 500 $\mu$l
- Detector: a differential refractometer, manufactured by Waters Corporation
- Calibration curve: prepared from a calibration curve obtained using a monodisperse polystyrene standard sample, using a predetermined conversion constant

(6) Evaluation of Dielectric Breakdown Voltage Performance

A piece having a diameter of 60 mm was cut out from the microporous membrane having a membrane thickness $T_1$, and placed on an aluminum plate having a size of 150 mm square. A column electrode made of brass and having a diameter of 50 mm was then placed on top of the piece of the microporous membrane, and a withstand voltage tester, TOS5051A, manufactured by Kikusui Electronics Corp was connected to the electrode. A voltage was applied to the microporous membrane at a voltage rise rate of 0.2 kV/sec, and the value $V_1$ of the voltage at which dielectric breakdown occurs was read. The value of the dielectric breakdown voltage $V_2$ per 20 $\mu$m of membrane thickness was then calculated, according to the conversion equation: $V_2 = (V_1 \times 20) / T_1$. The measurement of the dielectric breakdown voltage $V_2$ was carried out 15 times, and the maximum value, the mean value and the minimum value of the measured values were obtained.

The present invention will be described more specifically by way of the following Examples. It is noted, however, that the present invention is in no way limited to the following description of the Examples, as long as the gist of the present invention is not deviated from.

[Example 1]

< Polyolefin Microporous Membrane >

To 100 parts by mass of a polyethylene (PE) composition composed of 10% by mass of ultra high molecular weight polyethylene (UHMWPE) having a mass average molecular weight (Mw) of $1.0 \times 10^6$, and 90% by mass of high density polyethylene (HDPE) having an Mw of $2.8 \times 10^5$, 0.375 parts by mass of tetrakis[methylene-3-(3,5-di-tertiarybutyl-4-hydroxyphenyl)-propionate]methane was dry blended, to obtain a mixture.

A quantity of 28.5 parts by mass of the resulting mixture was introduced into a strong blending twin-screw extruder, and 71.5 parts by mass of liquid paraffin was supplied via a side feeder of the twin-screw extruder, followed by melt blending the resultant at a temperature of 180°C, to prepare a polyethylene solution. The melt blending was carried out under such conditions that the ratio L/D was within the range of from 20 to 100, the cylinder inner diameter of the twin-screw extruder was 54 mm, and the ratio Q/Ns was 0.6 kg/h/rpm or less.

The resulting polyethylene solution was supplied from the twin-screw extruder to a T die, and extruded so as to obtain a molding in the form of a sheet. The extruded molding was cooled to equal to or lower than the crystallization end temperature at a cooling rate of 250°C/min or more, while taking up the molding with a chill roll whose temperature was controlled to 25°C, to form a gel-like sheet. The resulting gel-like sheet was simultaneously biaxially stretched 5 × 5 times at a stretching temperature of 115°C, by a tenter method. The membrane after stretching was washed in a washing tank filled with dichloromethane whose temperature was controlled to 25°C, to remove liquid paraffin. The washed membrane was dried in a drying furnace controlled to 60°C, and then subjected to a heat setting treatment at 125°C for 40 seconds within a tenter, to obtain a microporous membrane having a thickness of about 20 $\mu$m.

Examples 2 to 3 and Comparative Examples 1 to 5

Polyolefin microporous membranes were produced in the same manner as in Example 1, except that the resin compositions of the polyolefin microporous membranes shown in Table 1 were used.

The physical properties of the polyolefin microporous membranes obtained in Examples 1 to 3 and Comparative Examples 1 to 3 are shown in Table 1.

[Table 1]

[Table 1]

| | | | | Example 1 | Example 2 | Example 3 | Comparative Example 1 | Comparative Example 2 | Comparative Example 3 | Comparative Example 4 | Comparative Example 5 |
|---|---|---|---|---|---|---|---|---|---|---|---|
| Material | UHWMPE | Mw | [-] | $1.0 \times 10^6$ | $1.0 \times 10^6$ | $1.0 \times 10^6$ | - | $1.0 \times 10^6$ | $1.0 \times 10^6$ | $2.5 \times 10^6$ | $2.5 \times 10^6$ |
| | | Added amount | [wt%] | 10 | 18 | 25 | 0 | 5 | 30 | 10 | 18 |
| | HDPE | Mw | [-] | $2.8 \times 10^5$ | $2.8 \times 10^5$ | $2.8 \times 10^5$ | $2.8 \times 10^5$ | $2.8 \times 10^5$ | $2.8 \times 10^5$ | $2.8 \times 10^5$ | $2.8 \times 10^5$ |
| | | Added amount | [wt%] | 90 | 82 | 75 | 100 | 95 | 70 | 90 | 82 |
| | Resin content | | [parts by mass] | 28.5 | 25 | 25 | 30 | 30 | 30 | 30 | 30 |
| | Plasticizer content | | [parts by mass] | 71.5 | 75 | 75 | 70 | 70 | 70 | 70 | 70 |
| Physical properties | Air resistance | | [sec/100 cm$^3$] | 269 | 326 | 407 | 241 | 303 | 432 | 547 | 458 |
| | | | [sec/100 cm$^3$/20 μm] | 237 | 375 | 399 | 247 | 243 | 337 | 402 | 313 |
| | Thickness of polyolefin microporous membrane | | [μm] | 22.8 | 17.4 | 20.4 | 19.5 | 24.9 | 25.6 | 23.8 | 29.3 |
| | Porosity | | [%] | 47 | 40.3 | 39.8 | 43 | 46.7 | 44 | 48.3 | 44.6 |
| | Pin puncture strength | | [N] | 5.56 | 4.82 | 5.73 | 3.67 | 5.85 | 6.9 | 4.26 | 7.27 |
| | Pin puncture strength in terms of 20 μm | | [N/20 μm] | 4.89 | 5.54 | 5.62 | 3.76 | 4.47 | 5.39 | 3.58 | 4.97 |
| | Melt-heat shrinkage rate (TD direction, in terms of 20 μm) | | [%] | 19.4 | 18.4 | 22.2 | 2.3 | 17.6 | 27.9 | 20.3 | 26 |
| | Maximum pore size | | [nm] | 57.9 | 49.1 | 46.2 | 79.5 | 67.5 | 39.3 | 57.1 | 41 |
| Dielectric breakdown voltage in terms of 20 mm | | | [kV/20 μm] | 3.28 | 3.46 | 3.47 | 2.92 | 3.15 | Not measured | Not measured | 3.1 |
| Ratio of polyolefin having a molecular weight of $5.0 \times 10^6$ or more | | | [%] | 0.7 | 1.1 | 1.4 | 0.3 | 0.5 | 1.6 | 1.9 | 3.2 |

(Evaluation Results)

It can be seen from Table 1 that the polyolefin microporous membranes of Examples have a melt-heat shrinkage ratio in the transverse direction in terms of 20 $\mu$m of from 3 to 25%, and a pin puncture strength in terms of 20 $\mu$m of 4.5 N or more. These polyolefin microporous membranes of Examples have a withstand voltage of 3 kV/20 $\mu$m or more, and are excellent in withstand voltage characteristics.

In contrast, in the polyolefin microporous membrane of Comparative Example 1, in which the polyolefin resin of a separator has such a molecular weight distribution that the ratio of the polyolefin resin having a molecular weight of $5.0 \times 10^6$ or more is 0.3%, the melt-heat shrinkage ratio in the transverse direction in terms of 20 $\mu$m was lower than 3%. As a result, in cases where the polyolefin microporous membrane is used as a battery separator, and when the battery is heated, thermal run-away starts while the micro-short circuit between the cathode and anode is still insufficient, and thus the energy of the battery is released all at once, resulting in a poor thermal stability. The polyolefin microporous membrane of Comparative Example 2, in which the ratio of the polyolefin resin having a molecular weight of $5.0 \times 10^6$ or more is 0.5%, have a maximum pore size of greater than 60 nm. This leads to an increased self-discharge, when used as a battery separator. In the polyolefin microporous membrane of Comparative Example 3, in which the ratio of the polyolefin resin having a molecular weight of $5.0 \times 10^6$ or more is 1.6%, the melt-heat shrinkage ratio in the transverse direction in terms of 20 $\mu$m was greater than 25%. As a result, in cases where the microporous membrane is used as a battery separator, and when the battery is heated to cause the separator to melt, a short circuit between the cathode and anode occurs abruptly and the energy of the battery is released all at once, resulting in a poor thermal stability.

The polyolefin microporous membrane of Comparative Example 4, in which the ratio of the polyolefin resin having a molecular weight of $5.0 \times 10^6$ or more is 1.6%, exhibited a pin puncture strength in terms of 20 $\mu$m of lower than 4.5 N. As a result, when used as a battery separator, the separator is more likely to rupture upon impact, to cause the occurrence of smoke emission or ignition. In the polyolefin microporous membrane of Comparative Example 5, in which the ratio of the polyolefin resin having a molecular weight of $5.0 \times 10^6$ or more is 3.2%, the melt-heat shrinkage ratio in the transverse direction in terms of 20 $\mu$m was greater than 25%. As a result, in cases where the microporous membrane is used as a battery separator, and when the battery is heated to cause the separator to melt, a short circuit between the cathode and anode occurs abruptly and the energy of the battery is released all at once, resulting in a poor thermal stability.

## Claims

1. A polyolefin microporous membrane which has a pin puncture strength per 20 $\mu$m of membrane thickness of 4.5 N or more, and which contains a polyolefin,
   wherein said polyolefin has such a molecular weight distribution that the ratio of the polyolefin having a weight average molecular weight of $5.0 \times 10^6$ or more is from 0.6 to 1.5%.

2. The polyolefin microporous membrane according to claim 1, which has a melt-heat shrinkage ratio in the TD direction, when a load of 2 g per 20 $\mu$m of membrane thickness is applied to said membrane, of 3% or more and 25% or less.

3. The polyolefin microporous membrane according to claim 1 or claim 2, which has a maximum pore size of 45 nm or more and 60 nm or less.

4. The polyolefin microporous membrane according to any one of claims 1 to 3, wherein said polyolefin is polyethylene.

5. The polyolefin microporous membrane according to claim 4, wherein said polyethylene contains ultra high molecular weight polyethylene having a weight average molecular weight of $1.0 \times 10^6$ or more.

6. The polyolefin microporous membrane according to claim 5, wherein said polyethylene contains 10% by mass or more and less than 30% by mass of said ultra high molecular weight polyethylene with respect to 100% by mass of the total amount of said polyolefin resin.

7. The polyolefin microporous membrane according to claim 5 or 6, wherein said ultra high molecular weight polyethylene has a weight average molecular weight of less than $2.0 \times 10^6$.

8. A battery comprising: a cathode; an anode; and a separator; and including said polyolefin microporous membrane according to any one of claims 1 to 7 as said separator.

**9.** The battery according to claim 8, which is a lithium ion secondary battery.

## INTERNATIONAL SEARCH REPORT

| | International application No. |
|---|---|
| | PCT/JP2018/010133 |

**A. CLASSIFICATION OF SUBJECT MATTER**
Int.Cl. C08J9/26(2006.01)i, H01M2/16(2006.01)i

According to International Patent Classification (IPC) or to both national classification and IPC

**B. FIELDS SEARCHED**

Minimum documentation searched (classification system followed by classification symbols)
Int.Cl. C08J9/26, H01M2/16

Documentation searched other than minimum documentation to the extent that such documents are included in the fields searched
Published examined utility model applications of Japan          1922–1996
Published unexamined utility model applications of Japan        1971–2018
Registered utility model specifications of Japan                1996–2018
Published registered utility model applications of Japan        1994–2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2008-501847 A (SK CORPORATION) 24 January 2008, claims 1, 4, paragraphs [0004], [0073], [0084], [0088], [0110], table 1, paragraph [0111], table 2, examples 3-7 & US 2005/0277702 A1, claims 1, 4, paragraphs [0002], [0005], [0051], [0052], [0067]-[0071], [0077], [0096], table 1, paragraph [0097], table 2 & WO 2005/121228 A1 & EP 1765920 A1 & KR 10-2005-0118061 A & KR 10-2006-0121802 A & CN 101001904 A | 1, 4, 8-9<br>1-2, 4-9<br>3 |
| Y | JP 2010-202828 A (ASAHI KASEI E-MATERIALS CORP.) 16 September 2010, claims 5-7, paragraph [0054], table 1, example 6 (Family: none) | 1, 4-9 |

☒ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 July 2018 (07.06.2018) | 19 June 2018 (19.06.2018) |

| Name and mailing address of the ISA/<br>Japan Patent Office<br>3-4-3, Kasumigaseki, Chiyoda-ku,<br>Tokyo 100-8915, Japan | Authorized officer |
|---|---|
| | Telephone No. |

Form PCT/ISA/210 (second sheet) (January 2015)

**INTERNATIONAL SEARCH REPORT**

International application No.

PCT/JP2018/010133

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2016-199734 A (SEKISUI CHEMICAL CO., LTD.) 01 December 2016, claim 2, paragraphs [0010], [0101], [0133]-[0136], example 5 (Family: none) | 2 |
| A | JP 2016-191006 A (ASAHI KASEI CORPORATION) 10 November 2016, claims 1, 7, 9, paragraphs [0001], [0048] (Family: none) | 1-9 |
| A | WO 2015/056631 A1 (TORAY BATTERY SEPARATOR FILM CO., LTD.) 23 April 2015, paragraphs [0091], [0116], table 1 to paragraph [0118], table 3, example 1 (Family: none) | 1-9 |
| A | JP 2009-132904 A (SK ENERGY CO., LTD.) 18 June 2009, claims 1, 3, paragraphs [0024], [0085], table 1 & US 2009/0148685 A1, claims 1, 3, paragraphs [0032], [0033], [0120], table 1 & EP 2065953 A1 & KR 10-2009-0055067 A & CN 101445624 A & CN 102339965 A | 1-9 |
| A | WO 2015/146859 A1 (TORAY BATTERY SEPARATOR FILM CO., LTD.) 01 October 2015, claims 1, 5, 7, 9, paragraphs [0070], [0080], [0083], example 4, fig. 3 & KR 10-2016-0137534 A & CN 106103561 A | 1-9 |
| A | US 5928582 A (XENON RESEARCH, INC.) 27 July 1999, whole document (Family: none) | 1-9 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009132904 A
- JP 2010007053 A
- JP 2015120786 A
- JP 2002256099 A